Europäisches Patentamt

(19) European Patent Office (11) Publication number: **0 088 124**

Office européen des brevets **B1**

(12) EUROPEAN PATENT SPECIFICATION

(45) Date of publication of patent specification: **09.09.87**  (51) Int. Cl.⁴: **B 27 B 9/02,** B 27 C 9/00, F 16 H 1/06

(21) Application number: **82903016.2**

(22) Date of filing: **16.09.82**

(86) International application number: **PCT/US82/01260**

(87) International publication number: **WO 83/01034 31.03.83 Gazette 83/08**

(54) **PORTABLE RADIAL ARM MACHINE WITH AN ADJUSTABLE OVERALL DIMENSION.**

(30) Priority: **16.09.81 IT 4351581**

(43) Date of publication of application: **14.09.83 Bulletin 83/37**

(45) Publication of the grant of the patent: **09.09.87 Bulletin 87/37**

(84) Designated Contracting States: **AT BE CH DE FR GB LI LU NL SE**

(56) References cited:
DE-A-2 631 767
DE-C- 366 549
DE-C- 948 445
FR-A-2 367 577
US-A-1 779 031
US-A-2 489 420
US-A-2 552 234
US-A-2 584 863
US-A-2 697 460
US-A-2 870 801
US-A-2 987 083
US-A-3 056 439
US-A-3 080 897

(73) Proprietor: **BYRNE, John J.**
**7718 Savannah Drive**
**Bethesda, MD 20034 (US)**

(72) Inventor: **RAGGIOTTI, Guglielmo**
**Via Della Gabbia, 11**
**I-Perugia (IT)**

(74) Representative: **Hartley, David et al**
**c/o Withers & Rogers 4 Dyer's Buildings Holborn**
**London, EC1N 2JT (GB)**

(56) References cited:
US-A-4 105 055
US-A-4 152 961
US-A-4 243 083
US-A-4 252 239
US-A-4 317 282

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This relates to a radial arm for a arm machine suitable to work on materials such as wood, light metals, plastic etc.

Radial arm machines per se are well known. For example a radial arm saw is disclosed in U.S.A. 2870801 in which the saw carriage is supported on the limbs of an inverted channel-shaped frame.

The object of the present invention is to provide a radial arm for a radial arm machine where the carriage is better stabilised in order to limit the weight and maintenance.

According to the present invention there is provided a radial arm for a radial arm machine comprising an elongate frame of inverted channel shape, a rod extending along the frame and being disposed within the channel, and a carriage movable along the frame, characterised in that:

the carriage is supported on the rod for movement along the frame and

the carriage is stabilised by adjustable and replaceable slide members in sliding engagement with the limbs of the inverted channel-shaped frame.

Preferably in the preferred arrangement the radial arm is part of a machine which is demountable so as to be portable. In the portable mode the machine may be carried like luggage and it takes up very little space.

Another feature of the preferred machine is that it gives the possibility to manufacture a very efficient portable radial arm machine at an amazing low cost. In addition an adapter may be provided to allow the machine to be driven by an electric drill.

The invention will now be described by way of example with reference to the accompanying drawings relating to a preferred embodiment of the invention and in which:

Figure 1 shows the basic settings of a radial arm machine in accordance with the invention;

Figure 2 illustrates the details of the carriage for the radial arm machine; and

Figure 3 illustrates an adapter for portable drills. In the drawing a radial arm machine has three basic components which are connected together to form the complete machine. These components are the base 1 having a working table — PL —; an upper part 2 comprising two supporting pillars and a radial arm — BR —; and a motor carriage 3.

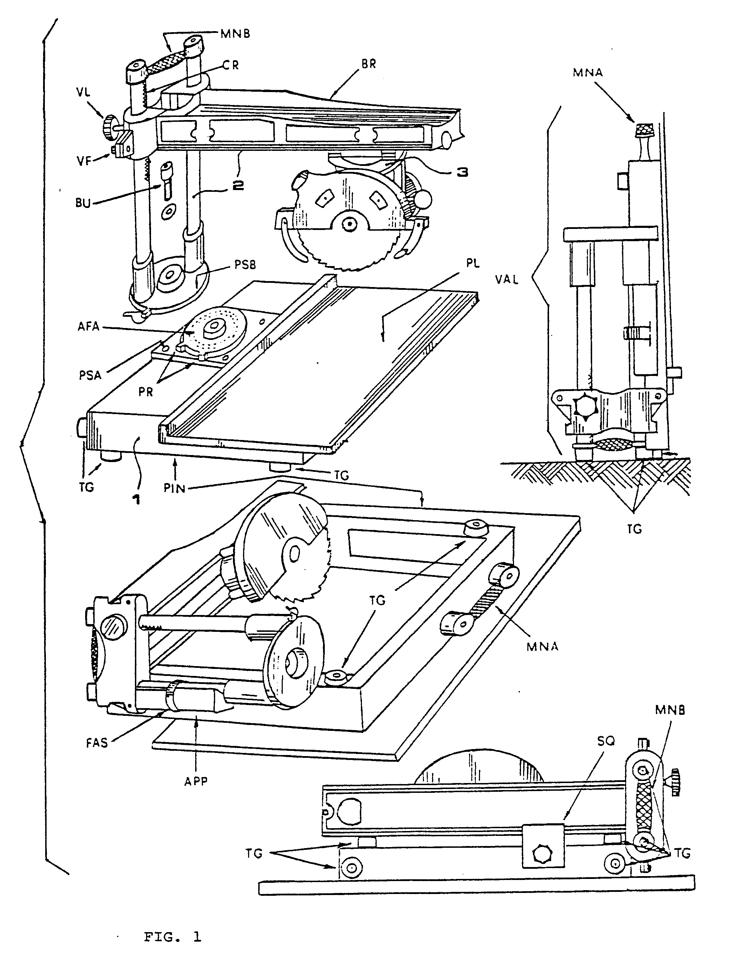

Referring firstly to figure 1 it will be seen that the base 1 is connected to the upper part 2 by means of two interconnecting Plates — PSA, PSB —, PSA mounted on the base 1 and PSB joining together the lower ends of the supporting pillars of the upper part 2. The interconnection itself consists of only one bolt — BU — in the working setting so that the components 2, 3 are readily fixed in an elevated position over the base 1 as shown. Using the same bolt — BU — and the interposition of a friction ring — APA — inserted between the two plates — PSA, PSB — the radial arm can be firmly set at a selected desired angle over the working table — PL —. If desired the friction ring — APA —

may be provided with stops — PR — in order to provide prefixed settings at common angles. The radial arm machine is preferably portable so that, by separation of the upper part 2 and motor carriage 3 from the base 1, the components 2 and 3 may be stowed on the underside of the base as shown. Thus in the portable mode the components are assembled parallel to the base 1 on the underside — PIN — and are secured by means of one bracket — APP — and two anchorages — SQ, FAS —. Moreover, in order to ease carrying of the machine in this packed condition a handle — MNA — is provided which allows the machine to be carried like a suit-case — VAL —.

A plurality of rubber plugs — TG — are provided on which the machine is supported either in its operative mode or its portable mode.

The two supporting pillars of the upper part 2 which are fixed at one end to: the plate — PSB — are interconnected at their other end by a handle — MNB —.

In use the radial arm — BR — is arranged to slide vertically on the pillars by means of one driving pinion — VL — and a co-operating rack portion — CR — cut in one of the supporting pillars. A bolt — VF — is provided which may be tightened when the radial arm — BR — is positioned at a desired vertical height above the work table — PL —.

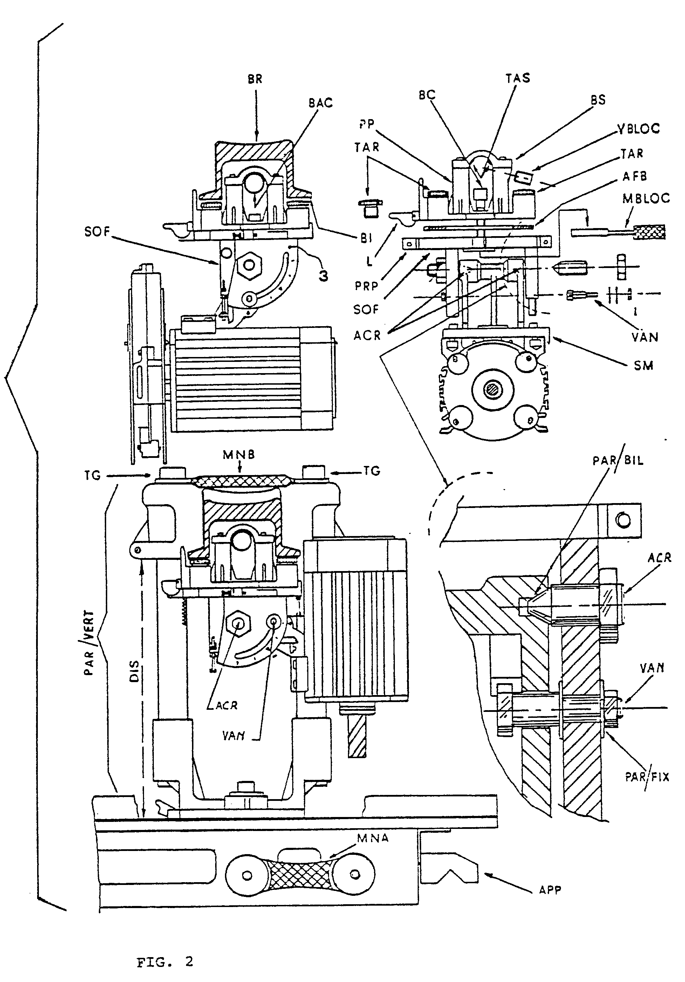

Referring now to figure 2 the radial arm — BR — comprises an elongate frame having the profile of an inverted "U" with a central steel rod — BAC — disposed within the downwardly extending limbs of the frame.

The steel rod — BAC — and the opposed edges — BI — of the limbs of the "U" — shaped or channel — shaped frame form the working engagement points for antifriction components — TAR, TAS — of a bracket which supports the carriage 3 for sliding movement along the radial arm — BR —.

The carriage 3 itself, in addition to carrying the motor, includes;

(i) a collar — BS — with antifriction plugs — TAS — which provide a bearing between the collar — BS — and the rod — BAC —;

(ii) a bearing member — PP — including rechangeable mounting parts for the other antifriction members which are adjustable pins — TAR —;

(iii) a yoke — SOF — joined to the bearing member — PP — by a pivot — BG —;

(iv) an operating handle — MBLOC — which is releasably mounted or fixed on the member — SOF —;

(v) a friction ring — AFB — inserted between the joining member — PP — and the yoke — SOF — so that the yoke can adapt a desired position relative to the joining member — PP — through pivot — BC — before being set in position;

(vi) a lever — L — for moving the yoke — SOF — to one of several stopping points — PRP — providing prefixed setting.

A motor drive support bracket — SM — secured as a balance arm — PAR/BIL — to the brackets of the yoke — SOF — by two conical adjustable joint grub screws — ACR —. The brackets have arcuate slots allowing it to swing — PAR/VERT — and it may block at different angulations by two securing pins — VAN —. The pins — VAN — are only partially threaded and have a plain shoulder so that they only block movement by tightening on the thickness of the brackets of the yoke — PAR/FIX — with a screw nut or a wing nut, the yoke thus not being deformed.

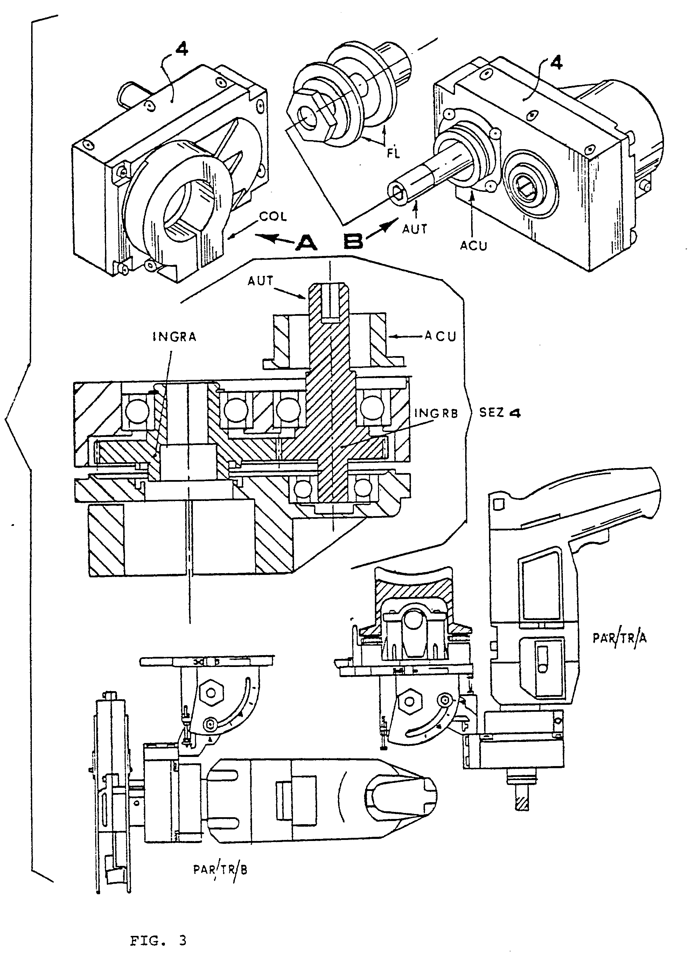

In figure 3 a special adapter is shown which makes it possible to use a portable electric drill as a motor and has the form of a rectangular box 4 having sides A and B. In the side A there is a collar — COL — to hold the drill as a motor — PAR/TR/A — B — and in the side B, there is a spindle — AUT — turnable by the drill through gears — SEZ4 —. The spindle — AUT — carries flanges — FL — defining the tool mounting position. Surrounding the spindle — AUT — and secured to the box 4 is a bracket — ACU — which provides a mounting position for fixing the safety guards.

The adapter adjusts the speed of the drill and is backspinning the spindle, relative to that of the drill, by means of two gears — SEZ. 4, INGRA, INGRE —. The adapter is designed not to interfere with the setting at different angles of the support bracket — SM —, as shown at — PAR/TA/A, PAR/TR/B —.

## Claims

1. A radial arm for a radial arm machine comprising an elongate frame (BR) of inverted channel shape, a rod (BAC) extending along the frame and being disposed within the channel, and a carriage (3) movable along the frame (BR), characterised in that:
the carriage (3) is supported on the rod for movement along the frame (BR) and
the carriage (3) is stabilised by adjustable and replaceable slide members in sliding engagement with the limbs of the inverted channel — shaped frame.

2. A radial arm according to claim 1 characterised in that the carriage (3) is supported on the rod (BAC) through a collar (BS) provided with bearings (TAS) for easy sliding movement of the carriage.

3. A radial arm according to claim 1 or 2 characterised in that the carriage (3) further includes a yoke (SOF) having two brackets between which may be held a motor drive support (SM).

4. A radial arm according to claim 3 wherein the brackets include opposed slots and the motor drive support (SM) is held between the brackets by releasable bolts so that the support can be swung into different angular positions and then held into position.

5. A radial arm according to claim 4 characterised in that the bolts (VAN) are divided into two sections, one like a smooth pin and the other with a thread so that the bolts only lock the support in position on the tightening in the thickness of the brackets of the yoke (SOF).

6. A radial arm machine including a radial arm according to any one of claims 1 to 5, a base (2) and support means for supporting the radial arm (BR) above the base, the upper part comprising the radial arm and the support means being demountable to reduce the overall dimensions of the machine whereby the machine may be rendered portable.

7. A radial arm machine according to claim 6 wherein the machine is demountable in two main parts by the means of only one bolt.

8. A radial arm machine according to claim 6 or 7 characterised in that the radial arm and support means are selectably mountable in two different positions; one an elevated position for working, and the other parallel to the base for ready handling.

9. A radial arm machine according to claim 8 characterised in that when set for portability in which the upper part is secured parallel to the base, the machine functions like a suit-case and is able to rest with the base vertical to the ground.

10. A radial arm machine according to any one of claims 6 to 9 including an adapter box (4) a collar (col) to hold an electric drill in one side, and a bracket (ACU) to hold safety guards in the other side, where there is also a spindle (AUT) for the tools.

## Patentansprüche

1. Radialarm für eine Radialarmmaschine, bestehend aus einem länglichen Rahmen (BR) in der Form eines umgedrehten Kanales und aus einer Stange (BAC), die sich länge des Rahmens erstreckt und die innerhalb des Kanales angeordnet ist, sowie aus einem entlang dem Rahmen (BR) bewegbaren Schlitten (3), dadurch gekennzeichnet, daß der Schlitten (3) zu seiner Bewegung längs des Rahmens (BR) an der Stange gehalten ist und daß der Schlitten (3) durch einstellbare und auswechselbare Gleitglieder stetig in gleitendem Kontakt mit den Schenkeln des in der Form eines umgekehrten Kanals ausgebildeten Rahmens gehalten ist.

2. Radialarm nach Anspruch 1, dadurch gekennzeichnet, daß der Schlitten (3) mit Hilfe eines Kragens (BS) an der Stange (BAC) geführt ist, der mit Lagern (TAS) für eine leichte Gleitbewegung des Schlittens versehen ist.

3. Radialarm nach den Ansprüchen 1 oder 2, dadurch gekennzeichnet, daß der Schlitten (3) ein Joch (SOF) mit zwei Armen besitzt, zwischen denen ein Support (SM) eines Antriebsmotors gehalten ist.

4. Radialarm nach Anspruch 3, dadurch gekennzeichnet, daß die Arme gegenüberliegende Schlitze besitzen und der Support (SM) des Motorantriebes durch lösbare Bolzen zwischen den Armen gehalten ist, so daß der Support in verschiedene Winkelpositionen geschwungen und dann in seiner Lage gehalten werden kann.

5. Radialarm nach Anspruch 4, dadurch gekennzeichnet, daß die Bolzen (VAN) in zwei Abschnitte unterteilt sind, von denen einer als glatter Stift und der andere mit einem Gewinde versehen ist, so daß die Bolzen den Support in seiner Lage nur bei einer Verklemmung in der Dicke der Arme des Joches (SOF) festsetzen.

6. Radialarmmaschine mit einem Radialarm nach einem der Ansprüche 1 bis 5 mit einem Grundgestell (2) und Trageinrichtungen zum Tragen des Radialarmes (BR) oberhalb des Grundgestelles, wobei der Oberteil den Radialarm enthält und die Trageinrichtung abnehmbar ist, um die Gesamtabmessungen der Maschine zu reduzieren, so daß die Maschine tragbar wird.

7. Radialarmmaschine nach Anspruch 6, wobei die Maschine in zwei Hauptteile mit Hilfe nur eines Bolzens zerlegbar ist.

8. Radialarmmaschine nach Anspruch 6 oder 7, dadurch gekennzeichnet, daß der Radialarm und die Trageinrichtung wahlweise in zwei verschiedenen Stellungen montierbar sind, wobei eine eine aufrechte Stellung für eine Bearbeitung und die andere eine Parallellage zum Grundgestell für eine einfache Handhabung ist.

9. Radialarmmaschine nach Anspruch 8, dadurch gekennzeichnet, daß dann, wenn sie für Tragbarkeit eingerichtet ist, bei der der obere Teil parallel zum Grundgestell gesichert ist, die Maschine in der Art eines Koffers wirkt und mit dem Grundgestell vertikal auf dem Boden aufsetzbar ist.

10. Radialarmmaschine nach einem der Ansprüche 6 bis 9 mit einem Adaptergehäuse (4), mit einem Kragen (COL) zur Halterung eines Elektrobohrers in einer Seite und mit einem Arm (ACU), um auf der anderen Seite eine Sicherheitsabdeckung zu halten, wobei auch eine Spindel (AUT) für Werkzeuge vorgesehen ist.

**Revendications**

1. Bras radial pour machine à bras radial comportant une structure allongée (BR) en forme de rigole renversée, une tige (BAC) placée le long de la structure et disposée à l'intérieur de la rigole, et un chariot (3) apte à se déplacer le long de la structure (BR), caractérisé en ce que:

le chariot est porté par la tige en vue de son déplacement le long de la structure (BR), et

le chariot (3) est stabilisé par des organes coulissants remplaçables, qui sont montés coulissants par rapport aux éléments de la structure en forme de rigole renversée.

2. Bras radial selon la revendication 1, caractérisée en ce que le chariot (3) est porté par la tige (BAC) par l'intermédiaire d'un collier (BS) muni de supports (TAS) aptes à faciliter le mouvement de coulissement du chariot.

3. Bras radial selon la revendication 1 ou la revendication 2, caractérisé en ce que le chariot (3) comporte en outre un étrier (SOF) ayant deux bras entre lesquels peut être tenu un support (SM) d'entraînement motorisé.

4. Bras radial selon la revendication 3, dans lequel les bras comportent des encoches opposées et le support (SM) d'entraînement motorisé est tenu entre les bras par des boulons amovibles, de sorte que le support peut être basculé en différentes positions angulaires et ensuite fixé en position.

5. Bras radial selon la revendication 4, caractérisé en ce que les boulons (VAN) sont en deux parties, l'une à surface lisse et l'autre avec un filetage, de sorte que les boulons verrouillent seulement le support en position lors du serrage dans l'épaisseur des bras de l'étrier (SOF).

6. Machine à bras radial comportant un bras radial selon l'une des revendications 1 à 5, une base (2) et des moyens de support pour supporter le bras radial au dessus de la base, la partie supérieure comportant le bras radial et les moyens de support étant démontables pour réduire les dimensions hors-tout de la machine, de façon à rendre la machine portable.

7. Machine à bras radial selon la revendication 6, dans laquelle la machine est démontable en deux parties principales au moyen d'un seul boulon.

8. Machine à bras radial selon la revendication 6 ou la revendication 7, caractérisée en ce que le bras radial et les moyens de support sont montables sélectivement selon deux positions différentes; l'une étant une position élevée de travail, et l'autre étant parallèle à la base pour la manipulation.

9. Machine à bras radial selon la revendication 8, caractérisée en ce que, lorsqu'elle est placée en position de transport pour laquelle la partie supérieure est positionnée parallèlement à la base, la machine se comporte comme mallette et est apte à reposer sur le sol avec la base verticale.

10. Machine à bras radial selon l'une quelconque des revendications 6 à 9, comportant un boîtier d'adaptation (4), un collier (COL) pour maintenir d'un côté une perceuse électrique, et un support (ACU) pour maintenir des organes de protection de l'autre côté, un arbre (AUT) étant également prévu pour les outils.

FIG. 1

FIG. 2

FIG. 3